# EUROPÄISCHE PATENTSCHRIFT

(11) **EP 0 842 954 B1**
(45) Veröffentlichungstag und Bekanntmachung des Hinweises auf die Patenterteilung: **21.03.2001**
(21) Anmeldenummer: 97118217.5
(22) Anmeldetag: 21.10.1997
(51) Int. Cl.: C08F 210/02, C08F 2/00, C08F 4/38

(54) **Verfahren zur Herstellung von Ethylen (Meth)acrylsäure-Copolymeren**
Process for preparing ethylene-(meth)acrylic acid copolymers
Procédé de préparation de copolymères d'éthylène-acide acrylique

(30) Priorität: 18.11.1996 DE 19647564
(43) Veröffentlichungstag der Anmeldung: 20.05.1998
(73) Patentinhaber: BASF AKTIENGESELLSCHAFT, 67056 Ludwigshafen (DE)
(72) Erfinder: Deckers, Andreas, Dr., 55234 Flomborn (DE); Schauss, Eckhard, Dr., 67259 Heuchelheim (DE); Klimesch, Roger, Dr., 64665 Alsbach-Hähnlein (DE); Weber, Wilhelm, Dr., 67435 Neustadt (DE)

(56) Entgegenhaltungen:
- EP-A- 0 394 794
- DE-A- 3 141 507
- DE-A- 3 404 742
- US-A- 4 351 931

## Beschreibung

Gegenstand der vorliegenden Erfindung ist ein Verfahren zur Herstellung von Copolymeren des Ethylens mit α,ß-ungesättigten Carbonsäuren bei Temperaturen von 50 bis 250°C und Drücken von 500 bis 5000 bar in gerührten Autoklaven mit einem Länge/DurchmesserVerhältnis größer als 5 : 1.

Weiterhin betrifft die vorliegende Erfindung Copolymere des Ethylens mit α,β-ungesättigten Carbonsäuren, die nach dem erfindungsgemäßen Verfahren erhältlich sind sowie die Verwendung dieser Copolymeren in wässrigen Dispersionen, als Haftvermittler und als Klebrohstoff.

Copolymere des Ethylens mit α,β-ungesättigten Carbonsäuren, insbesondere mit Acrylsäure, sind seit langem bekannt (vgl. Ullmanns Encyclopädie der technischen Chemie, 4. Auflage, Band 15, S. 428). Derartige Copolymere lassen sich nach einer teilweisen Neutralisation mit Basen ohne Zusatz von Emulgatoren in Wasser dispergieren. Um eine gelpartikelfreie Dispersion in Wasser zu erreichen ist jedoch eine weitgehende Homogenität des Copolymers ohne ausgedehnte Homopolymerbereiche von Acrylsäure und Ethylen erforderlich. Diese Homogenität wird bei Polymerisationen in ungerührten Rohrreaktoren, wie sie beispielsweise in DE-A-42 19 129 beschrieben werden, nicht erreicht.

Copolymerisate des Ethylens mit α,β-ungesättigten Carbonsäure, die in gerührten Autoklaven hergestellt werden, weisen in der Regel geringere Inhomogenitäten auf; die Homogenität bekannter derartiger Copolymerer läßt jedoch noch zu wünschen übrig.

In US-A-4 351 931 wird ein Copolymerisationsverfahren beschrieben, bei welchem die Homogenität durch sehr große Ethylen/Carbonsäure-Verhältnisse erreicht werden soll. Dieses Verfahren hat eine geringe Raum-Zeit-Ausbeute, da der weitaus größte Teil des Ethylens nicht umgesetzt wird und in den Reaktor zurückgeführt werden muß.

In EP-A-0 017 229 wird ein Copolymerisationsverfahren beschrieben, bei welchem die Reaktionstemperatur und der Reaktionsdruck in Abhängigkeit von den zur Einphasigkeit der Reaktionsmischung erforderlichen Prozeßparametern eingestellt werden. Dieses Copolymerisationsverfahren führt jedoch zu Copolymeren, die ebenfalls nicht gelpartikelfrei in Wasser dispergierbar sind.

Der vorliegenden Erfindung lag daher die Aufgabe zugrunde, ein Verfahren zur Copolymerisation von Ethylen mit α,β-ungesättigten Carbonsäuren zu finden, welches die Nachteile des Standes der Technik nicht mehr länger aufweist und zu Copolymeren führt, die sich gelpartikelfrei in Wasser dispergieren lassen.

Demgemäß wurde ein Verfahren zur Herstellung von Copolymeren des Ethylens mit α,β-ungesättigten Carbonsäuren bei Temperaturen von 50 bis 250°C und Drücken von 500 bis 5000 bar in gerührten Autoklaven mit einem Länge/Durchmesser-Verhältnis größer als 5 : 1, gefunden, welches dadurch gekennzeichnet ist, daß man die Monomerengemische in mindestens zwei Teilströmen in den Autoklaven einspeist, wobei der erste Teilstrom am Anfang des Autoklaven und ein zweiter Teilstrom an einer Position zwischen 25 und 50 % der Gesamtlänge vom Anfang entfernt in den Autoklaven eingeleitet wird und der Anteil der α,β-ungesättigten Carbonsäuren im ersten Teilstrom um 20 bis 90 % geringer ist als im Durchschnitt der weiteren Teilströme und mit dem ersten Teilstrom ein peroxidischer Polymerisationsinitiator mit einer niedrigeren Zerfallstemperatur oder eine Mischung peroxidischer Polymerisationsinitiatoren mit niedrigerer durchschnittlicher Zerfallsi temperatur eingeleitet wird, als dies für die Initiatoren in den weiteren Teilströmen der Fall ist.

Weiterhin wurden neue Copolymere gefunden, die nach diesem Verfahren erhältlich sind sowie die Verwendung dieser Copolymere in wässrigen Dispersionen, als Haftvermittler und als Klebrohstoff.

Die neben Ethylen als Comonomere in dem erfindungsgemäßen Verfahren einsetzbaren α,β-ungesättigten Carbonsäuren sind im allgemeinen kurzkettige Carbonsäuren mit 3 bis 8 Kohlenstoffatomen. Zu nennen sind beispielsweise Acrylsäure, Methacrylsäure, Crotonsäure, Maleinsäure, Fumarsäure und Monoester dieser Dicarbonsäuren wie Monomethylmaleat, Monomethylfumarat, Monoethylmaleat und Monoethylfumarat, wobei besonders Acrylsäure und Methacrylsäure bevorzugte Comonomere darstellen.

Die Temperatur- und Druckbedingungen, unter denen das erfindungsgemäße Verfahren durchgeführt wird, unterschieden sich im allgemeinen nicht von bereits bekannten ähnlichen Copolymerisationsverfahren. So beträgt der Druck zwischen 500 und 5000 bar, vor-zugsweise zwischen 1500 und 3000 bar. Die Reaktionstemperatur wird im allgemeinen konstant gehalten, die Copolymere mit den vorteilhaften Eigenschaften lassen sich ohne gezielt eingestellte Temperaturgradienten im Reaktor erhalten. Die Reaktionstemperatur liegt zwischen 50 und 250°C, vorzugsweise zwischen 150 und 250°C. Als vorteilhaft hat sich eine Vorwärmung der Monomergemische vor der Polymerisationszone auf 50 bis 100°C, insbesondere auf 70 bis 100°C erwiesen.

Als gerührte Autoklaven sollen druckfeste Polymerisationsgefäße verstanden werden, die mit einem Rührwerk ausgerüstet sind. Diese Autoklaven müssen für einen kontinuierlichen Prozeß ausgerüstet sein. Üblicherweise sind diese Autoklaven thermostatisierbar, insbesondere, um während der Polymerisationsphase die entstehende Polymerisationswärmeteilweiseabzuführen.

Erfindungsgemäß weisen die Autoklaven ein Länge/Durchmesser-Ver-hältnis von größer als 5 1, insbesondere von 10 : 1 bis 20 : 1, auf, wobei diese Maße jeweils die Innenmaße des Reaktors bezeichnen. Durch diese Geometrie ist es möglich, einerseits durch Rühren eine ausreichende Durchmischung der Monomeren zu gewährleisten und andererseits ein Reaktionsprofil entlang der Längs-achse des Reaktors aufzubauen. Dabei ist im ersten Teil naturgemäß wenig Copolymer anzutreffen, gleichzeitig ist der Carbonsäureanteil im Monomerengemisch unterdurchschnittlich. Zum Ende des Reaktors nimmt der Polymerisationsgrad und gleichzeitig der Carbonsäureanteil im Monomerengemisch zu.

Die Ausbildung des Reaktionsprofils, insbesondere hinsichtlich der Comonomerenanteile und der Initiatorverhältnisse, wird erfindungsgemäß durch die Einspeisung verschiedener Comonomerengemische und Initiatoren an verschiedenen Stellen des Reaktors erreicht. Am einfachsten und dennoch wirkungsvoll läßt sich das Verfahren so durchführen, daß man die Monomerengemische in zwei Teilströmen in den Autoklaven einspeist.

Der erste Teilstrom wird wie üblich am Anfang des Reaktors, d.h. am Eingangsende des Reaktors, eingespeist. Dieser Teilstrom enthält einen um 20 - 90 % geringeren Anteil an Carbonsäuremonomer als die weiteren Teilströme in ihrem Durchschnitt, oder, im einfachsten Fall, als der zweite Teilstrom. Enthält also beispielsweise der zweite Teilstrom einen Carbonsäureanteil von 20 mol-%, bezogen auf die Gesamtmenge des Gemisches aus Carbonsäure und Ethylen, so weist der erste Teilstrom lediglich einen entsprechenden Carbonsäuremonomeranteil von 2 bis 16 mol-% auf.

Ein zweiter Teilstrom wird erfindungsgemäß an einer Position zwischen 25 und 50 % der Gesamtlänge des Reaktors vom Anfang entfernt in den Autoklaven eingeleitet, vorzugsweise an einer Position zwischen 30 und 45 % der Gesamtlänge vom Anfang entfernt. Werden weitere Teilströme in den Reaktor eingeleitet, so können diese vorteilhaft über die Länge des Reaktors verteilt werden, wobei Teilströme, die nach mehr als 60 % der Gesamtlänge eingespeist werden, in der Regel nicht mehr ausreichend durchpolymerisiert werden.

Gute Polymerisationsergebnisse und homogene Copolymere werden insbesondere dann erhalten, wenn der Ethylenstrom gleichmäßig auf die verschiedenen Teilströme verteilt ist. Bei zwei Teilströmen sollte das Verhältnis der Ethylenströme in diesen Teilströmen beispielsweise zwischen 30 : 70 und 70 : 30, vorzugsweise zwischen 40 : 60 und 60 : 40 liegen.

Der über alle Teilströme gemittelte Carbonsäuremonomeranteil liegt zwischen 2 und 25 mol-%, vorzugsweise zwischen 5 und 15 mol-%, jeweils bezogen auf die Gesamtmenge aus Carbonsäure und Ethylen.

Neben der getrennten Einspeisung von unterschiedlichen Comonomergemisch-Teilströmen an verschiedenen Positionen des Reaktors wird das angestrebte Ziel der guten Copolymerhomogenität durch den Einsatz unterschiedlicher Initiatoren bzw. Initiatorenmischungen in diesen Teilströmen erreicht. Dabei werden die peroxidischen Initiatoren, die thermisch in Radikale zerfallen können, so gewählt, daß die Radikalbildung im ersten Teilstrom größer ist als im zweiten oder in den weiteren Teilströmen. Auf diese Weise erreicht man eine vergrößerte Aktivierungswahrscheinlichkeit für das trägere Comonomere Ethylen und damit die Bildung eines geringeren Anteils von Carbonsäurehomopolymerbereichen in der Anfangszone des Reaktors. Diese gesteigerte Radikalbildung am Anfang des Reaktors kann entweder durch einen Initiator mit geringerer Zerfallstemperatur oder durch ein Gemisch zweier oder mehrerer Initiatoren mit einer durchschnittlich geringeren Zerfallstemperatur erreicht werden, als dies für die Initiatoren in den weiteren Teilströmen der Fall ist.

Eine vorteilhafte Ausführungsform des erfindungsgemäßen Verfahrens ist dadurch gekennzeichnet, daß mit den Teilströmen Mischungen zweier peroxidischer Polymerisationsinitiatoren I und II eingespeist werden, wobei der Initiator I eine Zerfallstemperatur von <140°C und der Initiator II eine Zerfallstemperatur von >150°C aufweist und das Molverhältnis der Initiatoren I : II im ersten Teilstrom zwischen 6 : 1 und 2 : 1 und in den weiteren Teilströmen zwischen 1 : 1 und 1 : 4 beträgt.

Als peroxidische Polymerisationsinitiatoren I kommen neben weiteren mit ähnlicher Zerfallstemperatur beispielsweise t.-Butylperoxypivalat, t.-Butylperoxyisobutyrat, t.-Butyl-peroxy-2-ethylhexanoat, t.-Butylperoxydiethylacetat, t.-Amyl-peroxy-2-ethylhexanoat, 2,5-Bis(2-ethylhexanoylperoxy)-2,5-di-methylhexan, Bis(3,5,5-trimethylhexanoyl)peroxid, t.-Amyl-peroxy-pivalat, t.-Butylperoxyneodecanoat, Dibutylperoxydicarbonat, Bis(2-ethylhexyl)-peroxydicarbonat, t.-Amylperoxyneodecanoat, 2,4,4-Trimethylpentyl-2-peroxyneo-decanoat, Cumylperoxyneodecanoat und Diisobutanoylperoxid.

Als peroxidische Polymerisationsinitiatoren II kommen beispielsweise 1,1-Bis(t.-butylperoxy)cyclohexan, 1,1-Bis(t.-butylperoxy)butan, t.-Butylperoxy-3,5,5-trimethylhexanoat, t.-Butylperoxyisopropylcarbonat, t.-Butylperoxy-acetat, t.-Butylperoxybenzoat, 2,5-Bis(t.-butylperoxy)-2,5-Dimethylhexan, t.-Butylcumylperoxid, Di-t.-butylperoxid und 2,5-Bis(t.-butylperoxy)-2,5-dimethyl-3-hexin in Betracht.

Als Zerfallstemperatur wird dabei die Temperatur bezeichnet, bei der innerhalb einer Minute 50 % der Moleküle in Radikale zerfallen.

Wie bei üblichen Copolymerisationsverfahren von Ethylen mit α,β-ungesättigten Carbonsäuren kann das Molekulargewicht der Copolimerisate durch Zugabe von Reglersubstanzen beeinflußt werden. Als Regler kommen alle üblichen Regler, z.B. Kohlenwasserstoffe wie Propan, Propen und Buten, Ketone wie Aceton und Methylethylketon, Aldehyde wie Propionaldehyd sowie Wasserstoff in Betracht. Besonders geeignet sind Propionaldehyd, Propen und Buten.

Die nach dem erfindungsgemäßen Verfahren erhältlichen Copolymere weisen bemerkenswerte Eigenschaften auf. So zeigen sie beispielsweise eine ausgeprägte Gleichverteilung der Carbonsäuremonomereinheiten. Durch diese Gleichverteilung und den vernachlässigbaren Anteil von Carbonsäure- oder Ethylenclustern treten kaum kristalline Bereiche auf. Die Copolymere lassen sich nach Teilneutralisation, z.B. mit Ammoniak oder KOH, vollkommen gelpartikelfrei in Wasser dispergieren. Diese Dispersionen zeigen eine ausgezeichnete Lichtdurchlässigkeit. Aus diesen Gründen ist eine Verwendung der erfindungsgemäßen Copolymeren in wässrigen Dispersionen besonders vorteilhaft.

Die erfindungsgemäßen Polymerisate haben im allgemeinen Schmelzindices von 0,1 bis 50 g/10 min, insbesondere von 5 bis 20 g/10 min, gemessen nach DIN 53 735 bei 160°C und 0,36 kp.

Aufgrund ihrer wechselnden hydrophilen und hydrophoben Bereiche eignen sich die erfindungsgemäßen Copolymere weiterhin als Haftvermittler, beispielsweise für die Beschichtung von Stahlrohren. Die Copolymere weisen eine ausgezeichnete Haftung auf Metalloberflächen auf. Mit den Copolymeren beschichtete Metalloberflächen lassen sich anschließend besonders gut mit Lacken oder Kunststoffschichten überziehen.

Weiterhin finden die erfindungsgemäßen Copolymere Verwendung zur Beschichtung von Papier sowie zur Beschichtung von Düngemittelgranulaten. Mit den erfindungsgemäßen Copolymeren lassen sich derartige Granulate in einer Weise beschichten, daß eine langsame Freisetzung des Düngemittels erreicht wird. Solche "Slow-Release"-Formen von Düngemitteln ermöglichen oft eine bessere Ausnutzung des Düngemittels und ein geringeres Auswaschen des Düngemittels in das Grundwasser.

### Beispiele

### Allgemeine Vorschrift zur Herstellung der Copolymerisate

Die Copolymerisationen wurden in einem 35 1-Stahlautoklaven mit einem Länge/Durchmesser-Verhältnis von 15 durchgeführt. Die Comonomerengemische wurden in zwei Teilströmen am Anfang des Autoklaven und nach 45 % der Autoklavenlänge, vom Anfang an gemessen, eingetragen. Der Ethylenstrom in den Teilströmen war gleich (Gesamtethylendurchsatz 1400 kg/h), variiert wurden die Acrylsäureanteile und die Peroxidinitiator-Verhältnisse. Als Peroxid I wurde t.-Butylperoxypivalat, als Peroxid II t.-Butylperoxy-3,5,5-trimethylhexanoat eingesetzt. Acrylsäure wurde in den gewünschten Mengen zu Ethylen, welches auf 230 bar vorverdichtet worden war, zudosiert und in getrennten Verdichtern auf einen Enddruck von 2300 bar verdichtet. Außerdem enthielten alle Teilströme 1000 ppm Propionaldehyd. Die Gemische wurden auf 100°C vorgewärmt und in den Reaktor eingespeist. Unmittelbar an den Reaktoreingängen wurden die Initiatorgemische in den in der Tabelle angegebenen Molverhältnissen zugegeben. Durch Kühlung des Autoklaven mit heißem Wasser wurde die Reaktionstemperatur auf 230°C gehalten. Nach Durchlaufen des Autoklaven wurde das Reaktionsgemisch zweistufig entspannt und mithilfe eines Extruders ausgetragen. Nichtumgesetztes Ethylen wurde in den Prozeß zurückgeführt.

Die Ergebnisse zeigt die nachfolgende Tabelle.

| Bsp. | 1. Teilstrom | | | 2. Teilstrom | | | Lichtdurchlässigkeit |
|---|---|---|---|---|---|---|---|
| | I/II¹⁾ | ppm (I+II)²⁾ | AS %³⁾ | I/II¹⁾ | ppm (I+II)²⁾ | AS %³⁾ | [%]⁵⁾ |
| 1 | 4 : 1 | 40 | 3 | 1 : 1 | 30 | 7 | 85 |
| 2 | 4 : 1 | 40 | 3 | 1 : 3 | 30 | 7 | 81 |
| 3 | 4 : 1 | 35 | 4 | 1 : 1 | 39 | 6 | 79 |
| V⁴⁾ | 4 : 1 | 32 | 5 | 1 : 1 | 37 | 5 | 21 |

| | | | | | | | |
|---|---|---|---|---|---|---|---|
| ¹⁾ Molverhältnis der Peroxidinitiatoren I und II. | | | | | | | |
| ²⁾ Gesamtkonzentration der Peroxidinitiatoren I und II. | | | | | | | |
| ³⁾ Mol-% Acrylsäure, bezogen auf die Gesamtmenge von Acrylsäure und Ethylen. | | | | | | | |
| ⁴⁾ Nichterfindungsgemäßes Vergleichsbeispiel, gleicher AS-Anteil in beiden Teilströmen. | | | | | | | |
| ⁵⁾ Zur Messung der Lichtdurchlässigkeit wurden 25 g Polymer mit 71,32 g Wasser versetzt und mit 3,68 g 25 gew.-%iger Ammoniaklösung teilneutralisiert. Das Gemisch wurde 15 min bei 4 bis 5 bar auf 140°C erhitzt und nach Abkühlen mit Wasser 1 : 100 verdünnt. Die Lichtdurchlässigkeit wurde photometrisch bei einer Lichtwellenlänge von 533 nm gemessen. | | | | | | | |

## Patentansprüche

1. Verfahren zur Herstellung von Copolymeren des Ethylens mit α,β-ungesättigten Carbonsäuren bei Temperaturen von 50 bis 250°C und Drücken von 500 bis 5000 bar, dadurch gekennzeichnet, daß man die Monomerengemische in mindestens zwei Teilströmen in einen gerührten Autoklaven mit einem Länge/Durchmesser-Verhältnis größer als 5 : 1 einspeist, wobei der erste Teilstrom am Anfang des Autoklaven und ein zweiter Teilstrom an einer Position zwischen 25 und 50 % der Gesamtlänge vom Anfang entfernt in den Autoklaven eingeleitet wird und der Anteil der α,β-ungesättigten Carbonsäuren im ersten Teilstrom um 20 bis 90 % geringer ist als im Durchschnitt der weiteren Teilströme und mit dem ersten Teilstrom ein peroxidischer Polymerisationsinitiator mit einer niedrigeren Zerfallstemperatur oder eine Mischung peroxidischer Polymerisationsinitiatoren mit niedrigerer durchschnittlicher Zerfallstemperatur eingeleitet wird, als dies für die Initiatoren in den weiteren Teilströmen der Fall ist.

2. Verfahren nach Anspruch 1, dadurch gekennzeichnet, daß die Reaktion bei Drücken zwischen 1500 und 3000 bar durchgeführt wird.

3. Verfahren nach Anspruch 1 oder 2, dadurch gekennzeichnet, daß die Reaktion bei Temperaturen zwischen 150 und 250°C durchgeführt wird.

4. Verfahren nach den Ansprüchen 1 bis 3, dadurch gekennzeichnet, daß die Reaktion in einem Autoklaven mit einem Länge/Durchmesser-Verhältnis von 10 : 1 bis 20 : 1 durchgeführt wird.

5. Verfahren nach den Ansprüchen 1 bis 4, dadurch gekennzeichnet, daß man die Monomerengemische in zwei Teilströmen in den Autoklaven einspeist.

6. Verfahren nach den Ansprüchen 1 bis 5, dadurch gekennzeichnet, daß mit den Teilströmen Mischungen zweier peroxidischer Polymerisationsinitiatoren I und II eingespeist werden, wobei der Initiator I eine Zerfallstemperatur von <140°C und der Initiator II eine Zerfallstemperatur von >150°C aufweist und das Molverhältnis der Initiatoren I : II im ersten Teilstrom zwischen 6 : 1 und 2 : 1 und in den weiteren Teilströmen zwischen 1 : 1 und 1 : 4 beträgt.

7. Verfahren nach den Ansprüchen 1 bis 6, dadurch gekennzeichnet, daß man als α,β-ungesättigte Carbonsäuren Acrylsäure oder Methacrylsäure einsetzt.

## Claims

1. Process for the preparation of copolymers of ethylene with α,β-unsaturated carboxylic acids at from 50 to 250°C and from 500 to 5000 bar, wherein the monomer mixtures are fed into a stirred autoclave having a length/diameter ratio greater than 5 : 1 in at least two part-streams, the first part-stream being passed into the autoclave at the beginning of the autoclave pipe and the second part-stream being introduced at a position which is a distance away from the beginning which corresponds to 25-50% of the total length and the amount of the α,β-unsaturated carboxylic acids in the first part-stream is from 20 to 90% less than the average amount in the further part-streams and a peroxide polymerization initiator having a lower decomposition temperature, or a mixture of peroxide polymerization initiators having a lower average decomposition temperature, than that of the initiators in the further part-streams is passed in with the first part-stream.

2. A process as claimed in claim 1, wherein the reaction is carried out at from 1500 to 3000 bar.

3. A process as claimed in claim 1 or 2, wherein the reaction is carried out at from 150 to 250°C.

4. A process as claimed in any of claims 1 to 3, wherein the reaction is carried out in an autoclave having a length/diameter ratio of from 10 : 1 to 20 : 1.

5. A process as claimed in any of claims 1 to 4, wherein the monomer mixtures are fed into the autoclave in two part-streams.

6. A process as claimed in any of claims 1 to 5, wherein mixtures of two peroxide polymerization initiators I and II are fed in with the part-streams, initiator I having a decomposition temperature of <140°C and initiator II a decomposition temperature >150°C and the molar ratio of the initiators I : II in the first part-stream being from 6 : 1 to 2 : 1 and that in the further part-streams being from 1 : 1 to 1 : 4.

7. A process as claimed in any of claims 1 to 6, wherein the α,β-unsaturated carboxylic acid used is acrylic acid or methacrylic acid.

## Revendications

1. Procédé pour la préparation de copolymères d'éthylène avec des acides carboxyliques α,β-insaturés à des températures de 50 à 250°C et sous des pressions de 500 à 5000 bar, caractérisé par le fait qu'on injecte les mélanges de monomères en au moins deux courants partiels dans un autoclave agité ayant un rapport longueur/diamètre supérieur à 5 : 1, tandis que le premier courant partiel est introduit à l'entrée de l'autoclave et qu'un deuxième courant partiel est introduit en une position entre 25 et 50% de la longueur totale à partir de l'entrée dans l'autoclave et la proportion des acides carboxyliques α,β-insaturés dans le premier courant partiel est environ 20 à 90% plus faible que dans la moyenne des autres courants partiels, et qu'est introduit avec le premier courant partiel un initiateur de polymérisation de type peroxyde ayant une température de décomposition inférieure ou un mélange d'initiateurs de polymérisation de type peroxyde ayant une température moyenne de décomposition inférieure à ce qui est le cas pour les initiateurs dans les autres courants partiels.

2. Procédé selon la revendication 1, caractérisé par le fait que la réaction est effectuée à des pressions entre 1500 et 3000 bar.

3. Procédé selon la revendication 1 ou 2, caractérisé par le fait que la réaction est effectuée à des températures entre 150 et 250°C.

4. Procédé selon les revendications 1 à 3, caractérisé par le fait que la réaction est effectuée dans un autoclave ayant un rapport longueur/diamètre de 10 : 1 à 20 : 1.

5. Procédé selon les revendications 1 à 4, caractérisé par le fait qu'on injecte les mélanges de monomères en deux courants partiels dans l'autoclave.

6. Procédé selon les revendications 1 à 5, caractérisé par le fait qu'on injecte avec les courants partiels des mélanges de deux initiateurs de polymérisation de type peroxyde I et II, tandis que l'initiateur I présente une température de décomposition inférieure à 140°C et l'initiateur II une température de décomposition supérieure à 150°C et que le rapport molaire des initiateurs I : II se situe dans le premier courant partiel entre 6 : 1 et 2 : 1 et dans les autres courants partiels entre 1 : 1 et 1 : 4.

7. Procédé selon les revendications 1 à 6, caractérisé par le fait qu'on utilise comme acides carboxyliques α,β-insaturés l'acide acrylique ou l'acide méthacrylique.
